# EUROPÄISCHE PATENTSCHRIFT

(11) **EP 4 612 759 B1**
(45) Veröffentlichungstag und Bekanntmachung des Hinweises auf die Patenterteilung: **01.07.2026**
(21) Anmeldenummer: 23801722.2
(22) Anmeldetag: 03.11.2023
(51) Int. Cl.: H01R 4/02, B60R 16/023, H01R 12/55, H01R 4/70

(54) **STEUERGERÄT, ANTRIEBSEINHEIT MIT EINEM STEUERGERÄT UND VERFAHREN ZUR HERSTELLUNG EINER ANTRIEBSEINHEIT**
CONTROL DEVICE, DRIVE UNIT HAVING A CONTROL DEVICE, AND METHOD FOR PRODUCING A DRIVE UNIT
DISPOSITIF DE COMMANDE, UNITÉ D'ENTRAÎNEMENT COMPRENANT UN DISPOSITIF DE COMMANDE ET PROCÉDÉ PERMETTANT DE PRODUIRE UNE UNITÉ D'ENTRAÎNEMENT

(30) Priorität: 04.11.2022 DE 102022211669
(43) Veröffentlichungstag der Anmeldung: 10.09.2025
(73) Patentinhaber: Robert Bosch GmbH, 70442 Stuttgart (DE)
(72) Erfinder: DE RENZI, Vincenzo, 71636 Ludwigsburg (DE); LEONHARDT, Stephan, 75015 Bretten (DE); PRABHU, Thangavelan, Bangalore 560075 (IN); ASWEEN RAAJ, Baskaran, Tamil Nadu 638476 (IN)
(86) Internationale Anmeldenummer: PCT/EP2023/080712
(87) Internationale Veröffentlichungsnummer: WO 2024/094871

(56) Entgegenhaltungen:
- EP-B1- 3 167 539
- DE-A1- 102010 039 740
- DE-A1- 102019 218 039
- DE-U1- 202016 106 235
- US-A- 5 709 574

## Beschreibung

### Technisches Gebiet

Die Erfindung betrifft ein Steuergerät zur Ansteuerung eines Elektromotors, das sich durch eine besonders vorteilhafte bzw. wirtschaftliche Fertigung auszeichnet. Ferner betrifft die Erfindung eine Antriebseinheit, bestehend aus einem erfindungsgemäß ausgebildeten Steuergerät und einem mit dem Steuergerät verbundenen Elektromotor. Zuletzt umfasst die Erfindung ein Verfahren zur Herstellung einer derartigen Antriebseinheit.

### Stand der Technik

Aus der DE 10 2019 217 862 A1 der Anmelderin ist ein Steuergerät bekannt, dessen Stecker zur elektrischen Kontaktierung des Steuergeräts mit einem Gegenstecker eine Vielzahl von als Stanz-/Biegeteile ausgebildeten Steckerfahnen aufweist. Um die Steckerfahnen bzw. Kontaktelemente elektrisch leitend mit einer elektronischen Schaltung auf einer Leiterplatte zu verbinden, ist an einem Steckerkörper des Steckers ein plattenförmiges Führungselement mit Durchgangsöffnungen befestigt, das die Steckerfahnen zueinander positioniert und fluchtend zu in der Leiterplatte ausgebildeten Durchgangsöffnungen ausrichtet, um ein einfaches Verbinden der Steckerfahnen mit der Leiterplatte zu ermöglichen.

Weiterhin ist es aus der EP 3 167 539 B1 bekannt, in einem elektromechanischen Stellantrieb im Bereich von miteinander zu verschweißenden Kontaktelementen zur Vermeidung von Schweißspritzern o.ä. ein Schweißschutzelement anzuordnen, das verhindert, dass gegebenenfalls Bauelemente auf einem Schaltungsträger beschädigt bzw. vorgeschädigt werden.

Die Offenlegungsschrift DE 10 2010 039 740 A1 zeigt ein Steuergerät, bei dem Kontaktelemente eines Motors durch Öffnungen in einer Leiterplatte geführt und mit auf der Leiterplatte angeordneten Kontaktelementen verschweißt werden. Zum Führen der motorseitigen Kontaktelemente ist unterhalb der Leiterplatte ein Führungselement mit trichterförmigen Einführbereichen vorgesehen.

### Offenbarung der Erfindung

Das erfindungsgemäße Steuergerät zur Ansteuerung eines Elektromotors mit den Merkmalen des Anspruchs 1 hat den Vorteil, dass eine besonders sichere bzw. zuverlässige Montage von Kontaktelementen eines Elektromotors mit damit zusammenwirkenden Kontakten im Steuergerät erfolgt, wobei die angesprochenen Kontaktelemente des Elektromotors und des Steuergeräts miteinander verschweißt werden. Insbesondere ermöglicht es das erfindungsgemäße Steuergerät, dieses mit den Kontaktelementen des Elektromotors in einem Zustand zu verbinden, bei dem das Steuergerät im Wesentlichen bereits vollständig gefertigt ist.

Der Erfindung liegt die Idee zugrunde, das Steuergerät einerseits mit wenigstens einem Führungselement für die motorseitigen Kontaktelemente derart auszustatten, dass beim Verbinden von Kontaktelementen des Elektromotors und Durchführen dieser Kontaktelemente durch den Innenraum des Steuergeräts die motorseitigen Kontaktelemente Durchgangsöffnungen in einer Leiterplatte des Steuergeräts präzise durchqueren, und andererseits durch ein Schweißschutzelement bei einem anschließenden Schweißvorgang beim Verbinden der Kontaktelemente des Steuergeräts mit den Kontaktelementen des Elektromotors ein Schutz des Innenraums des Steuergeräts, insbesondere einer elektronischen Schaltung auf einer Leiterplatte, ermöglicht wird.

Vor dem Hintergrund der obigen Erläuterungen ist es daher bei einem erfindungsgemäßen Steuergerät zur Ansteuerung eines Elektromotors mit den Merkmalen des Anspruchs 1 vorgesehen, dass dieses ein einen Innenraum aufweisendes Gehäuse hat, in dem ein eine elektronische Schaltung aufweisender Schaltungsträger in Form einer Leiterplatte angeordnet ist, sowie mit ersten Kontaktelementen, die mit der elektronischen Schaltung elektrisch leitend verbunden sind, wobei die ersten Kontaktelemente dazu ausgebildet sind, mit zweiten Kontaktelementen des Elektromotors verschweißt zu werden, wobei die Leiterplatte Durchgangsöffnungen zum Durchführen der zweiten mit den ersten Kontaktelementen in jeweils einem Schweißabschnitt aufweist, wobei im Innenraum des Gehäuses auf der den ersten Kontaktelementen gegenüberliegenden Seite der Leiterplatte wenigstens ein Führungselement zum Ausrichten der zweiten Kontaktelemente zu den Durchgangsöffnungen und den Schweißabschnitten angeordnet ist, wobei das Gehäuse auf der dem wenigstens einen Führungselement zugewandten Seite der Leiterplatte eine erste Öffnung zum Einführen der zweiten Kontaktelemente in das Gehäuse zu dem wenigstens einen Führungselements aufweist, und wobei im Innenraum des Gehäuses wenigstens ein Schweißschutzelement zum Schutz der Leiterplatte beim Schweißen der Kontaktelemente angeordnet ist.

Vorteilhafte Weiterbildungen und Ausgestaltungen des erfindungsgemäßen Steuergeräts zur Ansteuerung eines Elektromotors sind in Unteransprüchen aufgeführt.

Besonders bevorzugt ist eine konstruktive Ausgestaltung, bei der das Gehäuse des Steuergeräts im Bereich der Schweißabschnitte eine von einem Deckelelement verschließbare zweite Öffnung aufweist, über die eine Schweißeinrichtung in den Innenraum des Gehäuses bis zu den Schweißabschnitten einführbar ist. Eine derartige Ausgestaltung ermöglicht einerseits in einem Zustand, bei dem Steuergerät lediglich noch mit dem Deckelelement verschlossen werden muss, einen Zugang bzw. eine Zugänglichkeit zu den Schweißabschnitten, und andererseits nach dem Verschließen der zweiten Öffnung durch das Deckelelement einen geschlossenen und somit insbesondere gegenüber dem Eintritt von Medien abgedichteten Innenraum des Gehäuses.

Zur Vermeidung elektrischer Kurzschlüsse sowie zur einfachen Montage und Anpassung des Führungselements und/oder des Schweißschutzelements an die jeweilige Geometrie des Steuergeräts bzw. der Kontaktelemente ist es bevorzugt vorgesehen, dass das Führungselement und/oder das Schweißschutzelement als Kunststoffspritzgussteil ausgebildet und über jeweils eine Rastverbindung mit dem Gehäuse verbunden ist. Die Rastverbindung ermöglicht insbesondere eine einfache Befestigung bzw. Positionierung des Führungselements und/oder des Schweißschutzelements ohne zusätzliche Befestigungselemente wie Schrauben o.ä. Befestigungselemente.

Eine bevorzugte Geometrie des Führungselements sieht vor, dass das Führungselement einen trichterförmigen Auffangbereich für ein zweites Kontaktelement aufweist, dessen Querschnitt sich in Richtung der Leiterplatte verringert, und dass sich auf der der Leiterplatte zugewandten Seite an den Auffangbereich ein einen zumindest im Wesentlichen konstanten Querschnitt aufweisender Führungsbereich anschließt, dessen Querschnitt dem Querschnitt des zweiten Kontaktelements angepasst ist, wobei die Querschnitte der einem zweiten Kontaktelement zugeordneten Durchgangsöffnung in der Leiterplatte und des Führungsbereichs in einer senkrecht zur Ebene der Leiterplatte verlaufenden Richtung fluchtend zueinander ausgerichtet sind.

Hinsichtlich der Geometrie des Schweißschutzelements sieht es eine bevorzugte Ausgestaltung vor, dass das Schweißschutzelement einen Bodenabschnitt mit Durchgangsöffnungen im Bereich von Kontaktabschnitten der ersten Kontaktelemente mit der Leiterplatte aufweist, wobei der Bodenabschnitt von wenigstens einer Seitenwand begrenzt ist, die vom Bodenabschnitt in Richtung eines Gehäusedeckels des Gehäuses ragt und vorzugsweise in Anlagekontakt mit dem Gehäusedeckel auf einer der Leiterplatte zugewandten Innenseite des Gehäuseoberteils angeordnet ist. Eine derartige geometrische Ausgestaltung des Schweißschutzelements ermöglicht einen vollständigen Schutz des Innenraums des Gehäuses, da lediglich die Verbindungsbereiche der ersten Kontaktelemente mit der Leiterplatte von dem Schweißschutzelement im Bereich der Durchgangsöffnungen nicht überdeckt bzw. abgedeckt sind. Da die Verbindungsbereiche zwischen den ersten Kontaktelementen und der Leiterplatte als elektrisch leitende Verbindungen ausgebildet sind, führt selbst das Auftreffen von Schweißspritzern o.ä. im Bereich der ersten Kontaktelemente nicht zu einer Beschädigung der elektronischen Schaltung bzw. der Bauteile.

Bevorzugt ist es darüber hinaus, dass die ersten Kontaktelemente als Stanz-/Biegeteile ausgebildete Kontaktfedern sind. Derartige, einen Federabschnitt aufweisende Kontaktfedern ermöglichen eine besonders einfache Verbindung der ersten Kontaktelemente mit den zweiten Kontaktelementen, da gegebenenfalls auftretende geometrische Abweichungen im Verbindungsbereich zwischen den Kontaktelementen durch den Federabschnitt leicht ausgeglichen werden können.

Weiterhin umfasst die Erfindung eine Antriebseinheit, bestehend aus einem soweit beschriebenen erfindungsgemäß ausgebildeten Steuergerät und einem Elektromotor, wobei der Elektromotor zweite Kontaktelemente, vorzugsweise in Form von Steckerfahnen aufweist, die in Schweißabschnitten mit den ersten Kontaktelementen des Steuergeräts verbunden sind.

In bevorzugter Weiterbildung einer derartigen Antriebseinheit ist es vorgesehen, dass das Gehäuse des Steuergeräts im Bereich mit einem Gehäuse des Elektromotors verbunden ist, und dass die zweiten Kontaktelemente zumindest mittelbar mit Wicklungsdrähten eines Stators des Elektromotors verbunden sind.

Zuletzt umfasst die Erfindung auch ein Verfahren zur Herstellung einer derartigen Antriebseinheit, wobei das Verfahren zumindest folgende Schritte aufweist: Zunächst erfolgt das Herstellen des Steuergeräts. Anschließend erfolgt ein Verbinden des Elektromotors mit dem Gehäuse des Steuergeräts durch Einführen der zweiten Kontaktelemente durch die erste Öffnung in das Gehäuse des Steuergeräts. Anschließend erfolgt ein Durchführen der zweiten Kontaktelemente durch das wenigstens eine Führungselemente und die Durchgangsöffnungen in der Leiterplatte und ein in Deckung bringen der zweiten Kontaktelemente mit den ersten Kontaktelementen in Schweißabschnitten. Anschließend erfolgt vorzugsweise das Ausbilden einer starren Verbindung zwischen dem Elektromotor und dem Gehäuse des Steuergeräts. Zuletzt erfolgt das Ausbilden von Schweißverbindungen zwischen den ersten und den zweiten Kontaktelementen.

Eine bevorzugte Weiterbildung des Verfahrens sieht vor, dass nach dem Ausbilden der Schweißverbindungen das Gehäuse des Steuergeräts im Bereich einer zweiten Öffnung des Steuergeräts durch ein Deckelelement verschlossen wird.

Weitere Vorteile, Merkmale und Einzelheiten der Erfindung ergeben sich aus der nachfolgenden Beschreibung bevorzugter Ausführungsformen der Erfindung sowie anhand der Zeichnungen.

### Kurze Beschreibung der Zeichnungen

- Fig. 1: zeigt einen Längsschnitt durch ein Steuergerät zur Ansteuerung eines Elektromotors,
- Fig. 2: eine Antriebseinheit, bestehend aus einem Steuergerät gemäß der Fig. 1 und einem an das Steuergerät angeflanschten Elektromotor und
- Fig. 3: eine Detailansicht eines Verbindungsbereichs zwischen Kontaktelementen des Steuergeräts und des Elektromotors in einer vergrößerten Darstellung.

### Ausführungsformen der Erfindung

Gleiche Elemente bzw. Elemente mit gleicher Funktion sind in den Figuren mit den gleichen Bezugsziffern versehen.

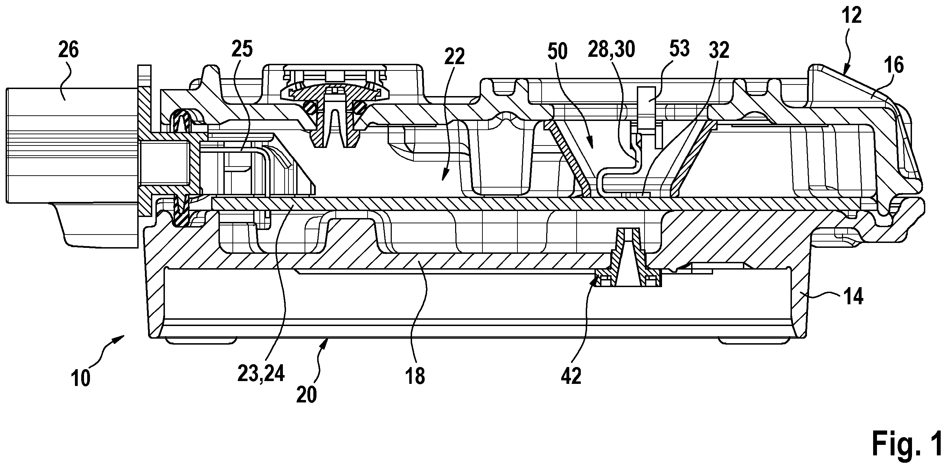

In der Fig. 1 ist ein Steuergerät 10 dargestellt, das ein mehrteilig ausgebildetes Gehäuse 12 aufweist. Das Gehäuse 12 umfasst im dargestellten Ausführungsbeispiel ein Gehäuseunterteil 14 und ein mit dem Gehäuseunterteil 14 verbundenes, im Wesentlichen haubenartiges Gehäuseoberteil 16. Das Gehäuseunterteil 14 und das Gehäuseoberteil 16 sind beispielhaft als Aluminiumdruckgussteile ausgebildet. Das Gehäuseunterteil 14 weist einen Zwischenboden 18 auf. Auf der dem Gehäuseoberteil 16 abgewandten Seite des Zwischenbodens 18 weist das Gehäuseunterteil 14 darüber hinaus eine erste Öffnung 20 auf. Zwischen dem Gehäuseoberteil 16 und dem Zwischenboden 18 des Gehäuseunterteils 14 ist innerhalb des Gehäuses 12 ein Innenraum 22 ausgebildet. Der Innenraum 22 dient der Aufnahme eines Schaltungsträgers 23 in Form einer Leiterplatte 24. Die Leiterplatte 24 weist eine im Einzelnen nicht dargestellte elektronischen Schaltung auf. Die elektronische Schaltung bzw. die Leiterplatte 24 ist über Steckerfahnen 25 elektrisch kontaktiert, die einerseits mit der Leiterplatte 24 elektrisch leitend verbunden sind, und andererseits über einen Steckeranschlusskörper 26 nach außen geführt sind, um mittels eines entsprechenden Gegensteckers elektrisch kontaktiert zu werden. Der Steckeranschlusskörper 26 ist zwischen dem Gehäuseunterteil 14 und dem Gehäuseoberteil 16 aufgenommen.

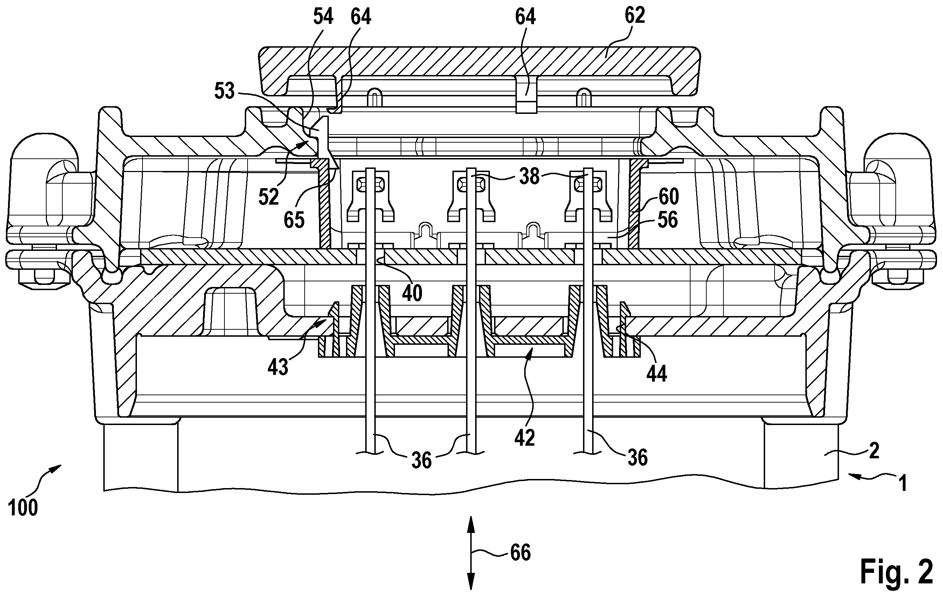

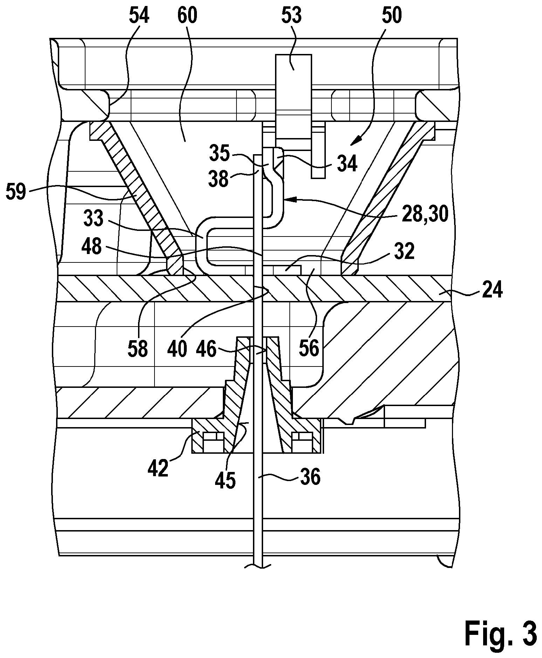

Auf der dem Gehäuseunterteil 14 abgewandten Oberseite der Leiterplatte 24 sind mehrere, insbesondere drei erste Kontaktelemente 28 in Form von Kontaktfedern 30 angeordnet, die als Stanz-/Biegeteile ausgebildet sind. Die Kontaktfedern 30 weisen einen parallel zur Ebene der Leiterplatte 24 angeordneten Kontaktabschnitt 32 auf, über den die Kontaktfedern 30 beispielsweise mit der elektronischen Schaltung der Leiterplatte 24 durch Lötverbindungen o.ä. elektrisch leitend kontaktiert bzw. verbunden sind. Der Kontaktabschnitt 32 geht in einen U-förmig ausgebildeten Federabschnitt 33 über, an den sich wiederum wenigstens ein Schweißabschnitt 34 mit einer wulstartigen Erhebung 35 anschließt, der dazu dient, die jeweilige Kontaktfeder 30 mit jeweils einem in den Fig. 2 und 3 erkennbaren zweiten Kontaktelement 36 eines Elektromotors 1 in Form einer Steckerfahne zu verbinden, und zwar durch eine (Punkt-) Schweißverbindung zwischen der Erhebung 35 am Schweißabschnitt 34 des ersten Kontaktelements 28 und einem Endabschnitt 38 des zweiten Kontaktelements 36. Dabei sind die Schweißabschnitte 34 der Federelemente 30 parallel zu den Endabschnitten 38 der zweiten Kontaktelemente 36 angeordnet. Das zweite Kontaktelement 36 ist vorzugsweise als ein, einen rechteckigen Querschnitt aufweisendes Stanzteil aus Blech ausgebildet.

Die Leiterplatte 24 weist zum Durchführen der zweiten Kontaktelemente 36 durch die Leiterplatte 24 jeweils eine Durchgangsöffnung 40 für ein zweites Kontaktelement 36 auf. Auf der dem Gehäuseunterteil 14 zugewandten Seite der Durchgangsöffnungen 40 ist ein Führungselement 42 zum Durchführen, Positionieren und Ausrichten der zweiten Kontaktelemente 36 zu den Durchgangsöffnungen 40 in der Leiterplatte 24 angeordnet. Das aus Kunststoff bestehende, und als Spritzgussteil ausgebildete Führungselement 42 ist mittels einer ersten Rastverbindung 43 im Bereich einer im Zwischenboden 18 ausgebildeten Öffnung 44 verrastbar, um das Führungselement 42 am Gehäuseunterteil 14 zu befestigen.

Das Führungselement 42 weist auf der der Leiterplatte 24 abgewandten Seite einen trichterförmig ausgebildeten Auffangbereich 45 auf, an den sich in Richtung zur Leiterplatte 24 ein einen zumindest im Wesentlichen konstanten Querschnitt aufweisender Führungsbereich 46 anschließt. Der Führungsbereich 46 endet im dargestellten Ausführungsbeispiel in einem Abstand zur Unterseite der Leiterplatte 24, er kann jedoch alternativ hierzu auch bis unmittelbar an die Unterseite der Leiterplatte 24 reichen oder sogar in Anlagekontakt mit der Unterseite der Leiterplatte 24 angeordnet sein.

Wesentlich ist, dass die Querschnitte sowohl der Führungsbereiche 46 als auch der Durchgangsöffnungen 40 in der Leiterplatte 24 dem Querschnitt der zweiten Kontaktelemente 36 derart angepasst sind, dass lediglich maximal ein geringfügiger Spalt zwischen dem Querschnitt der zweiten Kontaktelemente 36 und den Querschnitten der Führungsbereiche 46 bzw. der Durchgangsöffnungen 40 ausgebildet ist. Darüber hinaus sind die Führungsbereiche 46 des Führungselements 42 in einer senkrecht zur Ebene der Leiterplatte 24 verlaufenden Richtung fluchtend zu den Durchgangsöffnungen 40 in der Leiterplatte 24 ausgerichtet. Der jeweilige Kontaktabschnitt 32 der Kontaktfeder 30 weist weiterhin im Bereich der Durchgangsöffnung 40 der Leiterplatte 24 einen Durchbruch 48 auf, sodass die zweiten Kontaktelemente 36 die Kontaktabschnitt 32 der Kontaktfedern 30 durchqueren.

Auf der dem Gehäuseunterteil 14 abgewandten Seite der Leiterplatte 24 ist darüber hinaus ein Schweißschutzelement 50 angeordnet. Das Schweißschutzelement 50 ist über eine zweite Rastverbindung 52 mit mehreren Rasthaken 53 im Bereich einer zweiten Öffnung 54 des Gehäuseoberteils 16 mit dem Gehäuseoberteil 16 verbunden. Das aus Kunststoff bestehende und als Spritzgussteil ausgebildete Schweißschutzelement 50 weist einen Bodenabschnitt 56 mit Durchgangsöffnungen 58 im Bereich der Kontaktabschnitte 32 der Kontaktfedern 30 auf. Weiterhin ist der Bodenabschnitt 56 von wenigstens einer, senkrecht oder in einem schrägen Winkel zur Ebene der Leiterplatte 24 angeordneten Seitenwand 59, 60 begrenzt, die bis in Höhe der Unterseite der zweiten Öffnung 54 ragt und vorzugsweise in Anlagekontakt mit der Unterseite der der Leiterplatte 24 zugewandten Innenwand des Gehäuseoberteils 16 angeordnet ist.

Wesentlich ist darüber hinaus, dass das Schweißschutzelement 50, das den Innenraum 22 des Steuergeräts 10 beim Ausbilden von Schweißverbindungen zwischen den Kontaktelementen 28 und 36 vor Schweißspritzern o.ä. schützt, auf der der zweiten Öffnung 54 zugewandten Seite eine Zugänglichkeit zu den Schweißabschnitten 34 bzw. den zweiten Kontaktelementen 36 durch ein nicht dargestelltes Schweißwerkzeug über die zweite Öffnung 54 ermöglicht.

Die zweite Öffnung 54 des Gehäuseoberteils 16 ist mittels eines Deckelelements 62, das vorzugsweise als Kunststoffspritzgussteil ausgebildet ist, verschließbar. Hierzu weist das Deckelelement 62 zusätzliche Rasthaken 64 auf, die beispielsweise mit Unterseiten 65 an den Rasthaken 53 des Schweißschutzelements 50 zusammenwirken.

Die zweiten Kontaktelemente 36 bilden sogenannte Ständerdrähte aus und sind zumindest mittelbar mit Wicklungsdrähten eines Stators des Elektromotors 1 elektrisch leitend verbunden (nicht dargestellt), die beispielhaft drei elektrische Phasen des Elektromotors 1 ausbilden. Der Elektromotor 1 bildet zusammen mit dem Steuergerät 10 eine Antriebseinheit 100 aus, wobei der Elektromotor 1 ein in der Fig. 2 lediglich schematisch dargestelltes Gehäuse 2 aufweist, über das das Gehäuse 12 des Steuergeräts 10 mit dem Elektromotor 1 verbunden ist, beispielsweise mittels nicht dargestellter Schraubverbindungen.

Das Ausbilden der Antriebseinheit 100 erfolgt dadurch, dass in einem ersten Schritt zunächst das Steuergerät 10 gefertigt bzw. hergestellt wird, insbesondere auch das Führungselement 42 und das Schweißschutzelement 50 in der beschriebenen Art und Weise mit dem Gehäuse 12 verbunden wird. Wesentlich ist dabei, dass zunächst die zweite Öffnung 54 an dem Gehäuseoberteil 16 noch nicht mittels des Deckelelements 62 verschlossen ist. Anschließend erfolgt in einem zweiten Schritt ein aufeinander zubewegen bzw. Fügen des Elektromotors 1 mit dem Steuergerät 10. Hierzu werden die zweiten Kontaktelemente 36 in der in den Fig. 2 und 3 dargestellten Fügerichtung 66, die senkrecht zur Ebene der Leiterplatte 24 bzw. parallel zu den zweiten Kontaktelementen 36 verläuft, über die erste Öffnung 20 in die Auffangbereiche 45 des Führungselements 42 eingeführt. Über die Führungsbereiche 46 des Führungselements 42 gelangen die zweiten Kontaktelemente 36 anschließend durch die Durchgangsöffnungen 40 der Leiterplatte 24 bis in den Bereich bzw. in Überdeckung mit den Schweißabschnitten 34 der ersten Kontaktelemente 28. Wenn diese Position der zweiten Kontaktelemente 36 erreicht ist, erfolgt vorzugsweise das Verbinden des Gehäuses 2 des Elektromotors 1 mit dem Gehäuse 12 des Steuergeräts 10, beispielsweise mittels der angesprochenen Schraubverbindungen (nicht dargestellt). Anschließend wird über die zweite Öffnung 54 am Gehäuseoberteil 16 eine Schweißeinrichtung in den Innenraum 22 des Gehäuses 12 eingeführt, und zwar derart, dass sich die Schweißeinrichtung innerhalb des Schweißschutzelements 50 befindet bzw. von diesem umgeben ist. Durch die angesprochene Schweißeinrichtung (nicht dargestellt) werden anschließend die Schweißverbindungen zwischen den Kontaktelementen 28 und 36 ausgebildet. Zuletzt erfolgt nach dem Herausbewegen der Schweißeinrichtung aus dem Gehäuse 12 des Steuergeräts 10 ein Verschließen der zweiten Öffnung 54 mittels des Deckelelements 62.

## Patentansprüche

1. Steuergerät (10) zur Ansteuerung eines Elektromotors (1),
∘ mit einem einen Innenraum (22) aufweisenden Gehäuse (12), in dem ein eine elektronische Schaltung aufweisender Schaltungsträger (23) in Form einer Leiterplatte (24) angeordnet ist,
∘ mit ersten Kontaktelementen (28), die mit der elektronischen Schaltung elektrisch leitend verbunden sind, wobei die ersten Kontaktelemente (28) dazu ausgebildet sind, mit zweiten Kontaktelementen (36) des Elektromotors (1) verschweißt zu werden,
∘ wobei die Leiterplatte (24) Durchgangsöffnungen (40) zum Durchführen der zweiten Kontaktelemente (36) und zum in Überdeckung bringen der zweiten Kontaktelemente (36) mit den ersten Kontaktelementen (28) in jeweils einem Schweißabschnitt (34) aufweist,
∘ wobei im Innenraum (22) des Gehäuses (12) auf der den ersten Kontaktelementen (28) gegenüberliegenden Seite der Leiterplatte (24) wenigstens ein Führungselement (42) zum Ausrichten der zweiten Kontaktelemente (36) zu den Durchgangsöffnungen (40) und den Schweißabschnitten (34) angeordnet ist,
∘ wobei das Gehäuse (12) auf der dem wenigstens einen Führungselement (42) zugewandten Seite der Leiterplatte (24) eine erste Öffnung (20) zum Einführen der zweiten Kontaktelemente (36) in das Gehäuse (12) zu dem wenigstens einen Führungselement (42) aufweist,
**dadurch gekennzeichnet, dass**
∘ im Innenraum (22) des Gehäuses (12) wenigstens ein Schweißschutzelement (50) zum Schutz der Leiterplatte (24) beim Schweißen der Kontaktelemente (28, 36) angeordnet ist.

2. Steuergerät nach Anspruch 1,
**dadurch gekennzeichnet,**
**dass** das Gehäuse (12) im Bereich der Schweißabschnitte (34) eine von einem Deckelelement (62) verschließbare zweite Öffnung (54) aufweist, über die eine Schweißeinrichtung in den Innenraum (22) des Gehäuses (12) bis zu den Schweißabschnitten (34) einführbar ist.

3. Steuergerät nach Anspruch 1 oder 2,
**dadurch gekennzeichnet,**
**dass** das wenigstens eine Führungselement (42) und/oder das wenigstens eine Schweißschutzelement (50) als Kunststoffspritzgussteil ausgebildet und über jeweils eine Rastverbindung (43, 52) mit dem Gehäuse (12) verbunden ist.

4. Steuergerät nach einem der Ansprüche 1 bis 3,
**dadurch gekennzeichnet,**
**dass** das wenigstens eine Führungselement (42) einen trichterförmigen Auffangbereich (45) für ein zweites Kontaktelement (36) aufweist, dessen Querschnitt sich in Richtung zur Leiterplatte (24) hin verringert, und dass sich auf der der Leiterplatte (24) zugewandten Seite an den Auffangbereich (45) ein einen zumindest im Wesentlichen konstanten Querschnitt aufweisender Führungsbereich (46) anschließt, dessen Querschnitt dem Querschnitt des zweiten Kontaktelements (36) angepasst ist, wobei die Querschnitte der einem zweiten Kontaktelement (36) zugeordneten Durchgangsöffnung (40) in der Leiterplatte (24) und des Führungsbereichs (46) in einer senkrecht zur Ebene der Leiterplatte (24) verlaufenden Richtung fluchtend zueinander ausgerichtet sind.

5. Steuergerät nach einem der Ansprüche 1 bis 4,
**dadurch gekennzeichnet,**
**dass** das wenigstens eine Schweißschutzelement (50) einen Bodenabschnitt (56) mit Durchgangsöffnungen (58) im Bereich von Kontaktabschnitten (32) der ersten Kontaktelemente (28) mit der Leiterplatte (24) aufweist, wobei der Bodenabschnitt (56) von wenigstens einer Seitenwand (59, 60) begrenzt ist, die vom Bodenabschnitt (56) in Richtung eines Gehäuseoberteils (16) des Gehäuses (12) ragt und vorzugsweise in Anlagekontakt mit dem Gehäuseoberteil (16) auf einer der Leiterplatte (24) zugewandten Innenseite des Gehäuseoberteils (16) angeordnet ist.

6. Steuergerät nach einem der Ansprüche 1 bis 5,
**dadurch gekennzeichnet,**
**dass** die ersten Kontaktelemente (28) als Stanz-/Biegeteile ausgebildete Kontaktfedern (30) sind.

7. Antriebseinheit (100), bestehend aus einem Steuergerät (10), das nach einem der Ansprüche 1 bis 6 ausgebildet ist, und einem Elektromotor (1), der zweite Kontaktelemente (36) aufweist, die im Bereich von Schweißabschnitten (34) mit den ersten Kontaktelementen (28) verbunden sind.

8. Antriebseinheit nach Anspruch 7,
**dadurch gekennzeichnet,**
**dass** das Gehäuse (12) des Steuergeräts (10) mit einem Gehäuse (2) des Elektromotors (1) verbunden ist, und dass die zweiten Kontaktelemente (36) zumindest mittelbar mit Wicklungsdrähten eines Stators des Elektromotors (1) verbunden sind.

9. Verfahren zur Herstellung einer Antriebseinheit (100), die nach Anspruch 7 oder 8 ausgebildet ist, umfassend zumindest folgende Schritte:
- Herstellen des Steuergeräts (10)
- Verbinden des Elektromotors (1) mit dem Gehäuse (12) des Steuergeräts (10), umfassend das Einführen der zweiten Kontaktelemente (36) durch die erste Öffnung (20) in das Gehäuse (12)
- Durchführen der zweiten Kontaktelemente (36) durch das wenigstens eine Führungselement (42) und die Durchgangsöffnungen (40) in der Leiterplatte (24) und in Deckung bringen der zweiten Kontaktelemente (36) mit den ersten Kontaktelementen (28) im Bereich von Schweißabschnitten (34)
- vorzugsweise Ausbilden einer starren Verbindung zwischen dem Elektromotor (1) und dem Gehäuse (12) des Steuergeräts (10)
- Ausbilden von Schweißverbindungen zwischen den ersten und den zweiten Kontaktelementen (28, 36).

10. Verfahren nach Anspruch 9,
**dadurch gekennzeichnet,**
**dass** nach dem Ausbilden der Schweißverbindungen das Gehäuse (12) im Bereich einer zweiten Öffnung (54) durch ein Deckelelement (62) verschlossen wird.

## Claims

1. Control device (10) for controlling an electric motor (1),
∘ comprising a housing (12) having an interior (22) in which a circuit carrier (23) in the form of a printed circuit board (24) and having an electronic circuit is arranged,
∘ comprising first contact elements (28) which are electrically conductively connected to the electronic circuit, wherein the first contact elements (28) are designed to be welded to second contact elements (36) of the electric motor (1),
∘ wherein the printed circuit board (24) has passage openings (40) for the second contact elements (36) to pass through and for making the second contact elements (36) overlap with the first contact elements (28) in a welding section (34) in each case,
∘ wherein at least one guide element (42) for aligning the second contact elements (36) with the passage openings (40) and the welding sections (34) is arranged in the interior (22) of the housing (12) on the side of the printed circuit board (24) situated opposite the first contact elements (28),
∘ wherein the housing (12), on the side of the printed circuit board (24) facing the at least one guide element (42), has a first opening (20) for inserting the second contact elements (36) into the housing (12) to the at least one guide element (42),
**characterized in that**
∘ the interior (22) of the housing (12) has arranged in it at least one welding protection element (50) for protecting the printed circuit board (24) when the contact elements (28, 36) are welded.

2. Control device according to Claim 1,
**characterized**
**in that** the housing (12) has, in the region of the welding sections (34), a second opening (54) which can be closed by a cover element (62) and via which a welding device can be inserted into the interior (22) of the housing (12) as far as the welding sections (34).

3. Control device according to Claim 1 or 2,
**characterized**
**in that** the at least one guide element (42) and/or the at least one welding protection element (50) are/is in the form of a plastic injection-moulded part and are/is connected to the housing (12) via a latching connection (43, 52) in each case.

4. Control device according to any of Claims 1 to 3,
**characterized**
**in that** the at least one guide element (42) has a funnel-shaped receiving region (45) for a second contact element (36), the cross section of which receiving region decreases in the direction of the printed circuit board (24), and in that, on the side facing the printed circuit board (24), a guide region (46) having an at least substantially constant cross section adjoins the receiving region (45), the cross section of which guide region is adapted to the cross section of the second contact element (36), wherein the cross sections of the passage opening (40) in the printed circuit board (24) associated with a second contact element (36) and of the guide region (46) are aligned with each other in a direction running perpendicular to the plane of the printed circuit board (24).

5. Control device according to any of Claims 1 to 4,
**characterized**
**in that** the at least one welding protection element (50) has a bottom section (56) with passage openings (58) in the region of contact sections (32) of the first contact elements (28) with the printed circuit board (24), wherein the bottom section (56) is delimited by at least one side wall (59, 60) which protrudes from the bottom section (56) in the direction of a housing upper part (16) of the housing (12) and is preferably arranged in bearing contact with the housing upper part (16) on an inner side of the housing upper part (16) facing the printed circuit board (24).

6. Control device according to any of Claims 1 to 5,
**characterized**
**in that** the first contact elements (28) are contact springs (30) in the form of stamped/bent parts.

7. Drive unit (100) consisting of a control device (10), which is designed according to any of Claims 1 to 6, and an electric motor (1) which has second contact elements (36) which are connected to the first contact elements (28) in the region of welding sections (34).

8. Drive unit according to Claim 7,
**characterized**
**in that** the housing (12) of the control device (10) is connected to a housing (2) of the electric motor (1), and in that the second contact elements (36) are at least indirectly connected to winding wires of a stator of the electric motor (1).

9. Method for producing a drive unit (100), which is designed according to Claim 7 or 8, comprising at least the following steps:
- producing the control device (10)
- connecting the electric motor (1) to the housing (12) of the control device (10), comprising inserting the second contact elements (36) through the first opening (20) into the housing (12)
- passing the second contact elements (36) through the at least one guide element (42) and the passage openings (40) in the printed circuit board (24) and bringing the second contact elements (36) into alignment with the first contact elements (28) in the region of welding sections (34)
- preferably forming a rigid connection between the electric motor (1) and the housing (12) of the control device (10)
- forming welded connections between the first and the second contact elements (28, 36).

10. Method according to Claim 9,
**characterized**
**in that** the housing (12) is closed in the region of a second opening (54) by a cover element (62) after the welded connections have been formed.

## Revendications

1. Appareil de commande (10) destiné à piloter un moteur électrique (1),
∘ avec un boîtier (12) comportant un espace intérieur (22), dans lequel un support de circuit (23) comportant un circuit électronique est disposé sous la forme d'une carte de circuits imprimés (24),
∘ avec des premiers éléments de contact (28), qui sont reliés électriquement au circuit électronique, les premiers éléments de contact (28) étant formés pour être soudés à des deuxièmes éléments de contact (36) du moteur électrique (1),
∘ la carte de circuits imprimés (24) comportant des ouvertures de passage (40) pour le passage des deuxièmes éléments de contact (36) et pour amener les deuxièmes éléments de contact (36) en superposition avec les premiers éléments de contact (28) dans respectivement une section de soudage (34),
∘ au moins un élément de guidage (42) destiné à orienter les deuxièmes éléments de contact (36) par rapport aux ouvertures de passage (40) et aux sections de soudage (34) étant disposé dans l'espace intérieur (22) du boîtier (12) sur le côté de la carte de circuits imprimés (24) opposé aux premiers éléments de contact (28),
∘ le boîtier (12) comportant, sur le côté de la carte de circuits imprimés (24) tourné vers l'au moins un élément de guidage (42), une première ouverture (20) pour introduire les deuxièmes éléments de contact (36) dans le boîtier (12) vers l'au moins un élément de guidage (42),
**caractérisé en ce que**
∘ dans l'espace intérieur (22) du boîtier (12), au moins
un élément de protection contre le soudage (50) est disposé pour protéger la carte de circuits imprimés (24) lors du soudage des éléments de contact (28, 36).

2. Appareil de commande selon la revendication 1,
**caractérisé en ce**
**que** le boîtier (12) comporte, dans la zone des sections de soudage (34), une deuxième ouverture (54) pouvant être fermée par un élément de recouvrement (62), par laquelle un dispositif de soudage peut être introduit dans l'espace intérieur (22) du boîtier (12) jusqu'aux sections de soudage (34).

3. Appareil de commande selon la revendication 1 ou la revendication 2,
**caractérisé en ce**
**que** l'au moins un élément de guidage (42) et/ou l'au moins un élément de protection contre le soudage (50) sont formés comme une pièce moulée par injection en matière plastique et sont reliés au boîtier (12) par respectivement une liaison par encliquetage (43, 52).

4. Appareil de commande selon l'une des revendications 1 à 3,
**caractérisé en ce**
**que** l'au moins un élément de guidage (42) comporte une zone de collecte (45) en forme d'entonnoir pour un deuxième élément de contact (36), dont la section transversale diminue en direction de la carte de circuits imprimés (24), et que, sur le côté tourné vers la carte de circuits imprimés (24), une zone de guidage (46) comportant une section transversale au moins sensiblement constante, dont la section transversale est adaptée à la section transversale du deuxième élément de contact (36), se raccorde à la zone de collecte (45), les sections transversales de l'ouverture de passage (40) dans la carte de circuits imprimés (24) associée à un deuxième élément de contact (36) et de la zone de guidage (46) étant orientées les unes par rapport aux autres en alignement dans une direction s'étendant perpendiculairement au plan de la carte de circuits imprimés (24).

5. Appareil de commande selon l'une des revendications 1 à 4,
**caractérisé en ce**
**que** l'au moins un élément de protection contre le soudage (50) comporte une section de fond (56) avec des ouvertures de passage (58) dans la zone de sections de contact (32) des premiers éléments de contact (28) avec la carte de circuits imprimés (24), la section de fond (56) étant délimitée par au moins une paroi latérale (59, 60), qui dépasse de la section de fond (56) en direction d'une partie supérieure (16) du boîtier (12) et est disposée de préférence en contact d'appui avec la partie supérieure (16) de boîtier sur un côté intérieur de la partie supérieure (16) de boîtier tourné vers la carte de circuits imprimés (24).

6. Appareil de commande selon l'une des revendications 1 à 5,
**caractérisé en ce**
**que** les premiers éléments de contact (28) sont des ressorts de contact (30) formés comme des pièces estampées/pliées.

7. Unité d'entraînement (100), constituée d'un appareil de commande (10), qui est formé selon l'une des revendications 1 à 6, et d'un moteur électrique (1), qui comporte des deuxièmes éléments de contact (36), qui sont reliés aux premiers éléments de contact (28) dans la zone de sections de soudage (34).

8. Unité d'entraînement selon la revendication 7,
**caractérisé en ce**
**que** le boîtier (12) de l'appareil de commande (10) est relié à un boîtier (2) du moteur électrique (1), et que les deuxièmes éléments de contact (36) sont reliés au moins indirectement à des fils d'enroulement d'un stator du moteur électrique (1).

9. Procédé de fabrication d'une unité d'entraînement (100), qui est formée selon la revendication 7 ou 8, comprenant au moins les étapes suivantes :
- fabrication de l'appareil de commande (10)
- liaison du moteur électrique (1) au boîtier (12) de l'appareil de commande (10), comprenant l'introduction des deuxièmes éléments de contact (36) à travers la première ouverture (20) dans le boîtier (12)
- passage des deuxièmes éléments de contact (36) à travers l'au moins un élément de guidage (42) et les ouvertures de passage (40) dans la carte de circuits imprimés (24) et mise en coïncidence des deuxièmes éléments de contact (36) avec les premiers éléments de contact (28) dans la zone de sections de soudage (34)
- de préférence formation d'une liaison rigide entre le moteur électrique (1) et le boîtier (12) de l'appareil de commande (10)
- formation de liaisons soudées entre les premiers et les deuxièmes éléments de contact (28, 36).

10. Procédé selon la revendication 9,
**caractérisé en ce**
**qu'**après la formation des liaisons soudées, le boîtier (12) est fermé par un élément de recouvrement (62) dans la zone d'une deuxième ouverture (54).
